# FASCICULE DE BREVET EUROPEEN

(11) **EP 2 089 943 B1**
(45) Date de publication et mention de la délivrance du brevet: **04.01.2017**
(21) Numéro de dépôt: 07870320.4
(22) Date de dépôt: 21.11.2007
(51) Int. Cl.: H01S 3/00, G02F 1/35

(54) **SYSTÈME LASER À EMISSION D'IMPULSIONS PICOSECONDES**
LASERSYSTEM MIT PICOSEKUNDENIMPULSEMISSION
LASER SYSTEM WITH PICOSECOND PULSE EMISSION

(30) Priorité: 27.11.2006 FR 0610357
(43) Date de publication de la demande: 19.08.2009
(73) Titulaire: Centre National de la Recherche Scientifique (C.N.R.S.), 75794 Paris Cedex 16 (FR)
(72) Inventeur: PIOGER, Paul-Henri, 87000 Limoges (FR); VERGNE, Bertrand, 87000 Limoges (FR); COUDERC, Vincent, 87430 Verneuil sur Vienne (FR); BARTHELEMY, Alain, 87100 Limoges (FR)
(74) Mandataire: Novagraaf Technologies
(86) Numéro de dépôt international: PCT/FR2007/001916
(87) Numéro de publication internationale: WO 2008/074941

(56) Documents cités:
- AHMED K A ET AL: "Generation of 185 fs pedestal-free pulses using a 1.55 &micro" ELECTRONICS LETTERS, IEE STEVENAGE, GB, vol. 31, no. 3, 2 février 1995 (1995-02-02), pages 195-196, XP006002386 ISSN: 0013-5194
- MATSUI Y ET AL: "GENERATION OF 20-FS OPTICAL PULSES FROM A GAIN-SWITCHED LASER DIODEBY A FOUR-STAGE SOLITON COMPRESSION TECHNIQUE" IEEE PHOTONICS TECHNOLOGY LETTERS, IEEE SERVICE CENTER, PISCATAWAY, NJ, US, vol. 11, no. 10, octobre 1999 (1999-10), pages 1217-1219, XP000880899 ISSN: 1041-1135
- HALAS N J ET AL: "SIMULTANEOUS OPTICAL PULSE COMPRESSION AND WING REDUCTION" APPLIED PHYSICS LETTERS, AIP, AMERICAN INSTITUTE OF PHYSICS, MELVILLE, NY, US, vol. 48, no. 13, 31 mars 1986 (1986-03-31), pages 823-825, XP000706809 ISSN: 0003-6951
- STOLEN R H ET AL: "Intensity discrimination of optical pulses with birefringent fibers" OPTICS LETTERS USA, vol. 7, no. 10, octobre 1982 (1982-10), pages 512-514, XP002435948 ISSN: 0146-9592 cité dans la demande
- LI YUHUA ET AL: "Novel Method to Simultaneously Compress Pulses and Suppress Supermode Noise in Actively Mode-Locked Fiber Ring Laser" IEEE PHOTONICS TECHNOLOGY LETTERS, IEEE SERVICE CENTER, PISCATAWAY, NJ, US, vol. 10, no. 9, septembre 1998 (1998-09), XP011046253 ISSN: 1041-1135
- BIRKIN D J L ET AL: "Near-transform-limited picosecond pulses from a gain-switched InGaAs diode laser with fiber Bragg gratings" APPLIED PHYSICS LETTERS, AIP, AMERICAN INSTITUTE OF PHYSICS, MELVILLE, NY, US, vol. 79, no. 2, 9 juillet 2001 (2001-07-09), pages 151-152, XP012029353 ISSN: 0003-6951
- NIEMI T ET AL: "Effect of optical filtering on pulses generated with a gain-switched DFB laser" OPTICS COMMUNICATIONS, NORTH-HOLLAND PUBLISHING CO. AMSTERDAM, NL, vol. 192, no. 3-6, 1 juin 2001 (2001-06-01), pages 339-345, XP004243256 ISSN: 0030-4018
- DAVEY R P ET AL: "Subpicosecond pulse generation from a 1.3 [micro]m DFB laser gain-switched at 1 GHz" ELECTRONICS LETTERS, IEE STEVENAGE, GB, vol. 32, no. 4, 15 février 1996 (1996-02-15), pages 349-351, XP006004751 ISSN: 0013-5194
- DAVEY R P ET AL: "Ultrashort pulse generation and processing at 1.3 /spl mu/m for ultra high speed photonic networks" 19960101, 1 janvier 1996 (1996-01-01), pages 7/1-7/5, XP006510525
- ARMSTRONG D A ET AL: "1.3-ÄMUÜM DIODE-PUMPED ND:YLF ADDITIVE-PULSE MODE-LOCKED LASER" CONFERENCE ON LASERS AND ELECTRO-OPTICS (CLEO). BALTIMORE, MAY 22 - 26, 1995; [CONFERENCE ON LASERS AND ELECTRO-OPTICS (CLEO)], NEW YORK, IEEE, vol. CONF. 15, 1 janvier 1995 (1995-01-01), pages 344-345, XP009084629 ISBN: 978-0-7803-2659-0

## Description

L'invention se rapporte à un dispositif pour générer des impulsions courtes.

Afin de générer des impulsions courtes, typiquement de l'ordre de quelques dizaines ou quelques centaines de picosecondes, il est connu d'utiliser des lasers à modes bloqués.

Toutefois, le coût moyen d'un tel laser à modes bloqués est très élevé. Par ailleurs, il nécessite une importante maintenance pour garder ses performances du fait de sa complexité. Enfin, l'énergie de l'impulsion d'un laser à modes bloqués est faible du fait de son grand taux de répétition.

L'invention vise à pallier ces inconvénients des dispositifs de génération d'impulsions courtes connus.

Un but de l'invention est donc d'abord de fournir une alternative moins coûteuse et/ou plus compacte aux dispositifs pour générer des impulsions courtes comprenant un laser à modes bloqués.

Un autre but de l'invention est de fournir une alternative aux lasers à modes bloqués permettant d'obtenir de bons niveaux de puissance.

Selon l'invention, ce but est atteint en fournissant un dispositif comprenant un laser impulsionnel ayant une certaine durée d'impulsion, et en réduisant cette durée d'impulsion pour obtenir une impulsion courte en sortie.

Le principe général de la réduction de la durée d'une impulsion a déjà été décrit par exemple dans la publication de Stolen et al. «Intensity discrimination of optical pulses with birefringent fibers», Optics letters, octobre 1982.

Cette publication enseigne un dispositif comprenant :
- un laser impulsionnel polarisé ayant une direction de polarisation ;
- une fibre optique biréfringente ayant des axes de biréfringence, ladite direction de polarisation n'étant pas colinéaire auxdits axes de biréfringence ;
- un polariseur de sortie positionné en sortie de ladite fibre, ledit polariseur étant apte à sélectionner une polarisation en sortie de ladite fibre.

Dans cette publication, on décrit précisément pourquoi le fait que la direction de polarisation du laser ne soit pas colinéaire aux axes de biréfringence de la fibre permet, par rotation de polarisation sur les deux axes utilisant l'effet Kerr, de réduire la durée de l'impulsion en sortie du polariseur de sortie. Il est décrit dans cette publication que la durée d'impulsion est réduite et que les pattes de faible puissance de l'impulsion sont supprimées. Le polariseur de sortie permet de récupérer la partie de l'impulsion dont la polarisation a tourné en utilisant l'effet Kerr.

Dans cette publication, le laser impulsionnel est un laser à argon à modes bloqués. Le dispositif de la publication précitée permet donc de générer des impulsions courtes, mais à partir d'un laser impulsionnel générant lui-même déjà des impulsions courtes.

L'utilisation d'un laser à modes bloqués a donc les inconvénients cités plus haut.

Par ailleurs, la diminution de la durée d'impulsion décrite dans la publication précitée est trop faible pour être utilisée avec en entrée un laser de durée d'impulsion assez longue que l'on désirerait fortement réduire.

Au contraire, on sait que les lasers déclenchés, plus couramment appelés lasers « Q-switch » en langue anglaise, sont relativement simples, peu coûteux, et robustes.

Toutefois, on sait que ces lasers déclenchés ne délivrent que des impulsions de l'ordre de plusieurs centaines de picosecondes. De ce fait, les lasers Q-switch ne sont pas utilisés comme fournisseur d'impulsions courtes (quelques dizaines de picosecondes) ou ultracourtes (quelques dizaines de femtosecondes).

L'invention vise à-pallier ces inconvénients de l'art antérieur.

L'invention a notamment pour but de fournir une alternative moins coûteuse et/ou plus compacte aux dispositifs pour générer des impulsions courtes comprenant un laser à modes bloqués.

L'invention a également pour but de fournir un dispositif pour générer des impulsions plus courtes que celles pouvant être générées par un simple laser déclenché.

Au moins un de ces buts est atteint selon l'invention qui concerne un dispositif pour générer des impulsions courtes, ledit dispositif étant caractérisé en ce qu'il comprend :
- un laser impulsionnel polarisé ayant une direction de polarisation ;
- une fibre optique biréfringente ayant des axes de biréfringence, ladite direction de polarisation n'étant pas colinéaire auxdits axes de biréfringence ;
- un polariseur de sortie positionné en sortie de ladite fibre, ledit polariseur étant apte à sélectionner une polarisation en sortie de ladite fibre ;
dans lequel ledit laser impulsionnel est un laser quasi-monomode longitudinalement.

Selon l'invention, on fournit une alternative aux lasers à mode bloqués en réduisant la durée d'impulsion du laser impulsionnel déclenché.

Comme dans la publication précitée, ceci est réalisé notamment par un découpage passif utilisant l'effet Kerr dans une fibre biréfringente.

Selon l'invention également, le laser impulsionnel choisi est un laser quasi-monomode longitudinalement. Dans le cadre de l'invention, comme de façon générale pour l'homme du métier, on entendra par laser quasi-monomode longitudinalement, un laser comprenant un ou deux modes longitudinaux.

Ce laser s'oppose clairement au laser par exemple utilisé dans la publication précitée, qui est un laser à modes bloqués comprenant typiquement 100 à 200 modes longitudinaux.

Grâce à ce laser quasi-monomode longitudinalement, l'effet de réduction de la durée d'impulsion est fortement amélioré.

En effet, pour un laser produisant des impulsions à modes longitudinaux bloqués en phase, l'effet Kerr mentionné plus haut agit surtout sur la portion d'impulsion dont l'intensité est la plus élevée. Dans ces conditions, seules les faibles énergies synthétisées par les pattes de l'impulsion (généralement de type gaussienne ou sech²) restent inchangées et peuvent alors être diminuées. La diminution temporelle due au profil de l'impulsion reste alors faible devant la durée de l'impulsion, typiquement d'un facteur 1.5 à 3.

Au contraire, selon l'invention, pour un laser quasi-monomode, l'effet de réduction de la durée d'impulsion est fortement amélioré, typiquement avec un facteur de réduction pouvant être supérieur à 10 voire à 16.

On connaît également dans l'état de la technique, le document « Generation of 185 fs pedestral-free pulsing using a 1.55 distributed feedback semiconductor laser », de Ahmed et al., ELECTRONICS LETTERS, février 1995 qui enseigne un dispositif apte à générer des impulsions courtes, ledit dispositif comprenant:
- un laser impulsionnel polarisé ayant une direction de polarisation;
- une fibre optique biréfringente;
- un polariseur de sortie apte à sélectionner une polarisation en sortie de ta fibre.

Dans ce document, le laser impulsionnel polarisé est un lasser DFB, sigle anglais connu de l'homme du métier pour « Distributed Feedback Laser », signifiant « laser à contre-réaction répartie ». Ce laser DFB est un laser semi-conducteur à commutation de gain fonctionnant à 1,55 micromètres. Selon ce document, les impulsions issues de ce laser sont compressées et nettoyées par effet soliton et rotation non linéaire de la polarisation dans la fibre optique biréfringente.

Or, rien n'est précisé dans le document quant aux modes longitudinaux du laser DFB. Or, l'homme du métier sait bien que les lasers DFB peuvent comprendre un grand nombre de modes longitudinaux, typiquement 100 à 200 modes longitudinaux comme mentionné précédemment. Le document précité n'enseigne donc pas l'utilisation d'un laser quasi-monomode longitudinal et n'obtient donc pas la réduction de la durée des impulsions laser par effet Kerr comme dans l'invention mentionnée ci-dessus.

En outre, la combinaison d'un effet solitonique et d'une rotation de polarisation induit des effets particuliers et différents de ceux obtenus uniquement en utilisant une rotation de polarisation. En particulier, le régime solitonique impose un régime de dispersion anormale. En outre, la puissance de l'onde soliton est fixée par l'effet soliton.

Dès lors, selon l'invention, l'effet de réduction de la durée d'impulsion est obtenue par une combinaison du laser quasi-monomode longitudinal et de l'effet de rotation de polarisation et non, comme dans la publication susmentionnée, par une combinaison d'un effet solitonique et d'une rotation de polarisation. Le dispositif selon l'invention utilisant une rotation de polarisation non solitonique est alors plus simple, moins coûteux, et plus souple en termes de réglage que le dispositif de l'état de la technique utilisant une rotation solitonique, tout en permettant une bonne réduction de la durée d'impulsion.

Par rapport à la publication susmentionnée, l'invention résout donc notamment le problème de l'obtention d'une bonne réduction de la durée d'impulsion même en régime non solitonique.

En outre, pour une impulsion de 600 picosecondes, le régime solitonique de l'état de la technique a pour effet de faire exploser l'impulsion en sous-impulsions très brèves. Il est alors très complexe, selon l'état de la technique, de sélectionner une seule impulsion de durée réduite. Au contraire, selon l'invention, en utilisant un régime non solitonique, le dispositif est adapté à la réduction de la durée de tout type d'impulsions.

De plus, le fait de se placer, comme dans l'invention, en régime non solitonique, permet d'obtenir un régime de dispersion normale. Il est donc possible d'utiliser une fibre optique standard monomonde à 1 micromètre combinée à un microlaser émettant à 1 micromètre. Le dispositif ainsi obtenu est alors plus simple et moins coûteux que le dispositif de l'état de la technique utilisant le régime de dispersion anormale imposé par la propagation soliton.

Enfin, dans la publication susmentionnée, à cause du régime solitonique, il est très difficile voire impossible d'utiliser des impulsions nanosecondes ou subnanosecondes.

D'autres caractéristiques avantageuses de l'invention sont décrites ci-après.

En particulier, la fibre optique biréfringente peut être agencée pour générer une rotation de la direction de polarisation en régime de dispersion normale, notamment en régime non solitonique. Selon l'invention, il est alors possible d'obtenir un effet de réduction de la durée d'impulsion même dans un tel régime solitonique.

En outre, le laser impulsionnel peut être un laser déclenché à très faible longueur de cavité. Cette longueur de cavité impose alors un espacement fréquentiel df entre les modes longitudinaux qui doit être supérieur à la largeur de gain Δf du matériaux amplificateur du laser. De façon connue en soi, la valeur de l'espacement fréquentiel est *df*=*c*/*(2.l)*, avec c la vitesse de la lumière, et *l*, la longueur de la cavité Ceci assure que le laser est quasi-monomode longitudinal de façon simple. Le laser impulsionnel peut être un laser déclenché fonctionnant entre 800 nanomètres et 1,2 micromètres.

Par ailleurs, afin d'obtenir un laser impulsionnel ayant une direction de polarisation, il est possible soit, d'utiliser un laser impulsionnel non polarisé associé à un polariseur, soit un laser naturellement polarisé. Ce dernier cas a l'avantage de pouvoir bénéficier de toute la puissance du laser dans la direction de polarisation naturelle. Au contraire, l'avantage du polariseur est que l'on peut facilement choisir la direction de polarisation.

Par ailleurs, le dispositif susmentionné peut comprendre en outre une lame demi-onde positionnée entre le laser impulsionnel polarisé et la fibre, et agencé de sorte que la direction de polarisation de l'onde laser en sortie de ladite lame demi-onde ne soit pas colinéaire auxdits axes de biréfringence.

De façon alternative, ledit laser impulsionnel polarisé est agencé par rapport à ladite fibre de sorte que ladite direction de polarisation ne soit pas colinéaire auxdits axes de biréfringence.

De façon alternative, le dispositif susmentionné peut comprendre des boucles dites de Lefèbvre positionnées en entrée de fibre et agencé de sorte que la direction de polarisation de l'onde laser en sortie desdites boucles ne soit pas colinéaire auxdits axes de biréfringence de la fibre. Grâce à ces boucles de Lefèbvre, l'orientation du vecteur polarisation du laser impulsionnel polarisé par rapport aux axes de la fibre peut être contrôlée. Ces boucles de Lefèbvre sont connues de l'homme du métier comme ayant le pouvoir d'orienter le vecteur polarisation d'une radiation se propageant dans une fibre.

Par ailleurs, afin d'éviter toute dispersion modale, ledit laser impulsionnel polarisé est apte à émettre une impulsion laser à une longueur d'onde d'émission, et ladite fibre est une fibre monomode transverse à ladite longueur d'onde d'émission.

En outre, ladite fibre peut être telle que la longueur d'onde du zéro de dispersion de ladite fibre est supérieure à ladite longueur d'onde d'émission. De la sorte, on évite des effets physiques dits effets soliton qui gênent la réduction d'impulsion telle que précédemment décrite.

L'invention se rapporte également à un procédé de génération d'impulsions courte comprenant des étapes dans lesquelles :
- on fournit un dispositif tel que précédemment décrit ;
- le laser impulsionnel polarisé génère des impulsions longues ;
- les impulsions longues sont découpées dans la fibre optique biréfringente de sorte à générer les impulsions courtes;
- on récupère les impulsions courtes en sortie du polariseur de sortie.

Dans ce procédé, la Demanderesse a montré que la durée d'impulsion des impulsions courtes peut être 10 à 16 fois plus courtes que la durée d'impulsion des impulsions longues.

On décrit maintenant un mode de réalisation en référence aux figures annexées dans lesquelles :
- FIG. 1 représente un mode de réalisation d'un dispositif selon l'invention ;
- FIG. 2A et 2B représentent respectivement l'impulsion générée par le laser impulsionnel en entrée du dispositif selon l'invention et l'impulsion obtenue en sortie du dispositif selon l'invention.

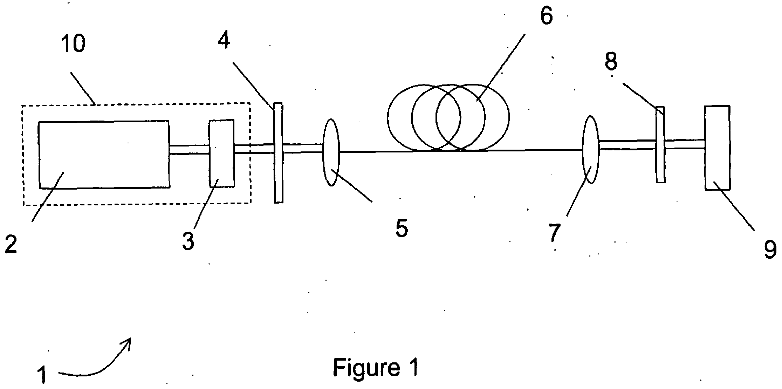

Illustré FIG. 1, un dispositif 1 selon l'invention comprend un laser impulsionnel 2, un polariseur d'entrée 3, une lame demi-onde d'entrée 4, une lentille d'entrée 5, une fibre biréfringente 6, une lentille de sortie 7, une lame demi-onde de sortie 8, et un polariseur de sortie 9.

Le laser impulsionnel 2 est un laser pouvant émettre des impulsions d'une durée de l'ordre de la nanoseconde. De façon plus générale, le laser 2 peut être un laser émettant des impulsions d'une durée supérieure à 100 picosecondes. En dessous de cette limite, une réduction de durée est difficile à mettre en oeuvre.

La fréquence d'émission est d'environ 6 kHz. Cette fréquence peut également être variable dans le cadre de l'invention, typiquement jusqu'à 100 kHz.

Le laser 2 émet dans une gamme comprise entre 800 nanomètres, et 1,2 micromètres, et de préférence dans le proche infrarouge avec une longueur d'onde de 1064 nanomètres.

Le laser 2 est longitudinalement monomode ou bimode au plus, par exemple un laser déclenché. Le laser 2 est également monomode ou bimode transverse avec dans ce cas un seul mode longitudinal par mode transverse. Ceci est réalisable si la cavité laser est agencée de sorte que les peignes de mode longitudinaux induits par chaque mode transverse sont espacés de plus de *c*/*(2.l)*, avec c la vitesse de la lumière et *l* la longueur de la cavité de sorte à ce qu'un seul mode longitudinal soit dans la zone de gain du matériau amplificateur de laser. Le laser 2 peut par exemple être un microlaser.

Le polariseur d'entrée 3 est placé en sortie du laser pour polariser le faisceau de sortie du laser. L'ensemble comprenant le laser 2 et le polariseur 3 forme un laser polarisé 10 auquel on se réfèréra par la suite.

Si le laser 2 est directement polarisé, ce polariseur peut être supprimé du mode de réalisation. Dans ce cas, le laser polarisé 10 est constitué uniquement du laser impulsionnel 2.

La fibre 6 est une fibre monomode transverse à la longueur d'onde d'émission de 1064 nanomètres du laser. C'est une fibre biréfringente comprenant donc des axes de biréfringences, également appelés axes neutres.

La lame d'onde 4 est placée entre le laser polarisé 10 et la fibre 6 pour orienter l'axe de polarisation du laser polarisé 10 par rapport aux axes de biréfringence de la fibre 6.

Selon l'orientation du laser polarisé 10 par rapport à la fibre 6, la lame d'onde 4 oriente l'axe de polarisation du laser polarisé 10 de sorte que la direction de polarisation ne soit pas parallèle aux axes de biréfringence de la fibre 6. Si le laser polarisé 10 est directement orienté par rapport à la fibre 6 de sorte que la condition précédente soit réalisée, on peut également se passer de la lame d'onde 4 dans le cadre de l'invention.

La lentille 5 forme un moyen d'injection du signal laser issu de la lame d'onde 4 dans la fibre 6.

Le signal laser traverse la fibre 6 et subit les effets de non-linéarités de la fibre dûs à la biréfringence. Ces effets sont par exemple des effets d'automodulation de phase ou de modulation de phase croisée correspondant à un élargissement spectral. En particulier, comme il a été montré dans la publication précitée, l'effet Kerr induit une rotation du vecteur de polarisation du signal laser. Cet effet se produit lorsque la direction de polarisation du signal en entrée de la fibre n'est pas colinéaire aux axes de biréfringences, de sorte que les projections du vecteur de polarisation sur les deux axes sont non nulles.

La fibre 6 est telle que l'effet de rotation du vecteur de polarisation est réalisé dans un régime de dispersion normale dans un mode non solitonique.

En sortie, une lentille 7 de collimation permet d'obtenir un faisceau de faible divergence.

Le polariseur 9 permet, selon son orientation par rapport à la fibre 6 ou à la lame demi-onde 8, de sélectionner une durée d'impulsion plus ou moins importante et s'étendant entre la durée de l'impulsion d'entrée et une impulsion raccourcie d'un facteur maximal proche de 16.

Lorsque le polariseur 9 est agencé par rapport à la fibre 6 de sorte à sélectionner le signal de sortie, éventuellement par l'intermédiaire de la lame demi-onde 8, seule la puissance ayant subi de façon majoritaire l'effet Kerr est prélevée.

On peut ensuite positionner un analyseur temporel, non représenté, pour déterminer le profil temporel du signal ainsi obtenu.

La Demanderesse a démontré que l'effet de réduction de l'impulsion était très fort grâce au fait que le laser impulsionnel d'entrée est quasi-monomode longitudinal. Cette utilisation préférentielle de l'effet Kerr permet notamment d'obtenir un facteur de réduction de l'ordre de 10 à 16.

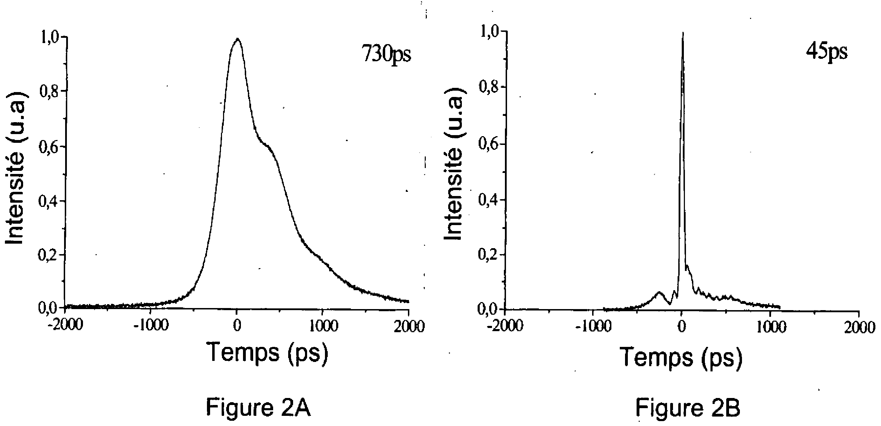

La FIG. 2A illustre une impulsion émise par le laser impulsionnel polarisé 10 sous la forme d'une intensité en fonction du temps, en picosecondes. Le temps caractéristique de la durée d'impulsion est d'environ 730 picosecondes.

La FIG. 2B est le signal obtenu en sortie du dispositif 1 selon l'invention sous la forme d'une intensité en fonction du temps, en picosecondes. Le temps caractéristique de la durée d'impulsion est d'environ 45⁺ picosecondes, ce qui correspond à un facteur de réduction de 16.

Ce facteur de réduction est beaucoup plus important que les facteurs de réduction qui avait pu être reporté dans les publications concernant l'association d'une fibre biréfringente et d'un laser multi-mode.

Dans le cadre de l'invention, les impulsions obtenues en sortie du dispositif 1 sont donc courtes par rapport aux impulsions obtenues en sortie du laser impulsionnel polarisé 10, qui, en comparaison, génère des impulsions longues. Le rapport entre les impulsions courtes et les impulsions longues peut être environ de un à plus de dix.

## Revendications

1. Dispositif (1) pour générer des impulsions courtes, ledit dispositif comprenant :
- un laser impulsionnel polarisé (10, 2, 3) ayant une direction de polarisation ;
- une fibre optique biréfringente (6) ayant des axes de biréfringence, ladite direction de polarisation n'étant pas colinéaire auxdits axes de biréfringence ;
- un polariseur de sortie (9) positionné en sortie de ladite fibre, ledit polariseur étant apte à sélectionner une polarisation en sortie de ladite fibre ;
**caractérisé en ce que** ledit laser impulsionnel est un laser quasi-monomode longitudinalement,
et **en ce que** la fibre optique biréfringente (6) est agencée pour générer une rotation de la direction de polarisation en régime de dispersion normale dans un mode non solitonique.

2. Dispositif selon la revendication 1, dans lequel le laser déclenché est à très faible longueur de cavité, ladite longueur de cavité imposant un espacement fréquentiel (df) entre les modes longitudinaux supérieur à la largeur de gain (Δf) du matériaux amplificateur dudit laser, la valeur de l'espacement fréquentiel étant *df=c*/*(2.l),* avec c la vitesse de la lumière, et *l*, la longueur de la cavité.

3. Dispositif selon l'une des revendications précédentes, dans lequel ladite fibre est telle que la longueur d'onde du zéro de dispersion de ladite fibre est supérieure à ladite longueur d'onde d'émission.

4. Dispositif selon l'une des revendications précédentes dans lequel ledit laser impulsionnel est un laser déclenché.

5. Dispositif selon la revendication précédente dans lequel le laser impulsionnel est agencé pour fonctionner entre 800 nanomètres et 1,2 micromètres.

6. Dispositif selon l'une des revendications précédentes, dans lequel ledit laser impulsionnel (10, 2, 3) comprend un laser impulsionnel non polarisé (2) et un polariseur d'entrée (3).

7. Dispositif selon l'une des revendications précédentes comprenant en outre une lame demi-onde (4) positionnée entre le laser impulsionnel et la fibre, et agencé de sorte que la direction de polarisation de l'onde laser en sortie de ladite lame demi-onde ne soit pas colinéaire auxdits axes de biréfringence.

8. Dispositif selon l'une des revendications 1 à 6 comprenant des boucles de Lefèbvre positionnées en entrée de fibre et agencé de sorte que la direction de polarisation de l'onde laser en sortie desdites boucles ne soit pas colinéaire auxdits axes de biréfringence de la fibre.

9. Dispositif selon l'une des revendications 1 à 6 dans lequel ledit laser impulsionnel polarisé est agencé par rapport à ladite fibre de sorte que ladite direction de polarisation ne soit pas colinéaire auxdits axes de biréfringence.

10. Dispositif selon l'une des revendications précédentes dans lequel ledit laser impulsionnel polarisé est apte à émettre une impulsion laser à une longueur d'onde d'émission, et ladite fibre est une fibre monomode transverse à ladite longueur d'onde d'émission.

11. Dispositif selon l'une des revendications précédentes dans lequel ladite fibre est telle que la longueur d'onde de zéro de dispersion de ladite fibre est supérieure à ladite longueur d'onde d'émission.

12. Dispositif selon l'une des revendications précédentes, dans lequel le polariseur (9) permet, selon son orientation par rapport à la fibre (6) ou à une lame demi-onde (8) positionnée en sortie de fibre (6), de sélectionner une durée d'impulsion plus ou moins importante s'étendant entre la durée de l'impulsion d'entrée et une impulsion raccourcie d'un facteur maximal proche de 16.

13. Procédé de génération d'impulsions courtes comprenant des étapes dans lesquelles :
- on fournit un dispositif (1) selon l'une quelconques des revendications précédentes ;
- le laser impulsionnel polarisé (10, 2, 3) génère des impulsions longues ;
- les impulsions longues sont découpées dans la fibre optique biréfringente (6) de sorte à générer les impulsions courtes;
- on récupère les impulsions courtes en sortie du polariseur de sortie (9).

14. Procédé de génération d'impulsions courtes selon la revendication 13, dans lequel on sélectionne une durée d'impulsion plus ou moins importante s'étendant entre la durée de l'impulsion d'entrée et une impulsion raccourcie d'un facteur maximal proche de 16 par sélection de l'orientation du polariseur (9) par rapport à la fibre (6) ou à une lame demi-onde (8) positionnée en sortie de fibre (6).

## Patentansprüche

1. Vorrichtung (1) zum Erzeugen kurzer Impulse, wobei die Vorrichtung Folgendes umfasst:
- einen polarisierten gepulsten Laser (10, 2, 3), der eine Polarisationsrichtung hat;
- eine doppelt brechende Lichtleitfaser (6), die Doppelbrechungsachsen hat, wobei die Polarisationsrichtung nicht zu den Doppelbrechungsachsen kolinear ist;
- einen Ausgangspolarisator (9), der am Ausgang der Faser positioniert ist, wobei der Polarisator fähig ist, eine Polarisation am Ausgang der Faser auszuwählen;
**dadurch gekennzeichnet, dass** der gepulste Laser ein Längs-Quasi-Einzelmodenlaser ist,
und dass die doppelt brechende Lichtleitfaser (6) eingerichtet ist, um eine Drehung der Polarisationsrichtung im normalen Dispersionssystem in einem nicht solitonischen Modus zu erzeugen.

2. Vorrichtung nach Anspruch 1, wobei der gütegeschaltete Laser sehr geringe Hohlraumlänge hat, wobei die Hohlraumlänge einen Frequenzabstand (df) zwischen den oberen Längsmodi auf die Verstärkungsbreite (Δ*f*) des Verstärkungswerkstoffs des Lasers auferlegt, wobei der Frequenzabstandwert *df=c*/*(2.l)* ist, wobei c die Lichtgeschwindigkeit ist, und 1 die Länge des Hohlraums ist.

3. Vorrichtung nach einem der vorhergehenden Ansprüche, wobei die Faser derart ist, dass die Wellenlänge der Null Streuung der Faser größer ist als die Sendewellenlänge.

4. Vorrichtung nach einem der vorhergehenden Ansprüche, wobei der gepulste Laser ein gütegeschalteter Laser ist.

5. Vorrichtung nach dem vorhergehenden Anspruch, wobei der gepulste Laser eingerichtet ist, um zwischen 800 Nanometer und 1,2 Mikrometer zu funktionieren.

6. Vorrichtung nach einem der vorhergehenden Ansprüche, wobei der gepulste Laser (10, 2, 3) einen nicht polarisierten gepulsten Laser (2) und einen Eingangspolarisator (3) umfasst.

7. Vorrichtung nach einem der vorhergehenden Ansprüche, die außerdem eine Halbwellenplatte (4) umfasst, die zwischen dem gepulsten Laser und der Faser positioniert und derart eingerichtet ist, dass die Polarisationsrichtung der Laserwelle am Ausgang der Halbwellenplatte zu den Doppelbrechungsachsen nicht kolinear ist.

8. Vorrichtung nach einem der Ansprüche 1 bis 6, die Lefèbvre-Schleifen umfasst, die am Fasereingang positioniert und derart eingerichtet sind, dass die Polarisationsrichtung der Laserwelle am Ausgang der Schleifen zu den Doppelbrechungsachsen der Faser nicht kolinear ist.

9. Vorrichtung nach einem der Ansprüche 1 bis 6, wobei der polarisierte gepulste Laser in Bezug zu der Faser derart eingerichtet ist, dass die Polarisationsrichtung nicht mit den Doppelbrechungsachsen kolinear ist.

10. Vorrichtung nach einem der vorhergehenden Ansprüche, wobei der polarisierte gepulste Laser geeignet ist, um einen Laserimpuls mit einer Sendewellenlänge abzugeben, und die Faser eine Einzelmodenfaser quer zu der Sendewellenlänge ist.

11. Vorrichtung nach einem der vorhergehenden Ansprüche, wobei die Faser derart ist, dass die Wellenlänge von null Streuung der Faser größer ist als die Sendewellenlänge.

12. Vorrichtung nach einem der vorhergehenden Ansprüche, wobei es der Polarisator (9) je nach seiner Ausrichtung in Bezug zu der Faser (6) oder zu einer Halbwellenplatte (8), die am Ausgang der Faser (6) positioniert ist, erlaubt, eine mehr oder minder große Impulsdauer auszuwählen, die sich zwischen der Dauer des Eingangsimpulses und einem mit einem maximalen Faktor von nahe 16 gekürzten Impuls erstreckt.

13. Verfahren zum Erzeugen kurzer Impulse, das Schritte umfasst, bei welchen:
- man eine Vorrichtung (1) nach einem der vorhergehenden Ansprüche liefert;
- der polarisierte gepulste Laser (10, 2, 3) lange Impulse erzeugt;
- die langen Impulse in der doppelt brechenden Lichtleitfaser (6) derart geschnitten werden, dass kurze Impulse erzeugt werden;
- man die kurzen Impulse am Ausgang des Ausgangs Polarisators (9) wiedergewinnt.

14. Verfahren zum Erzeugen kurzer Impulse nach Anspruch 13, wobei man eine mehr oder minder große Impulsdauer auswählt, die sich zwischen der Dauer des Eingangsimpulses und einem Impuls, der um einen maximalen Faktor nahe 16 gekürzt ist, durch Auswahl der Ausrichtung des Polarisators (9) in Bezug zu der Faser (6) oder einer Halbwellenplatte (8), die am Ausgang der Faser (6) positioniert ist, erstreckt.

## Claims

1. Device (1) for generating short pulses, said device comprising:
- a polarised pulse laser (10, 2, 3) having a polarisation direction;
- a birefringent optical fibre (6) having birefringence axes, said polarisation direction not being collinear to said birefringence axes;
- an output polariser (9) positioned at the output of said fibre, said polariser being suitable for selecting a polarisation at the output of said fibre;
**characterised in that** said pulse laser is a longitudinally quasi-single-mode laser,
and **in that** the birefringent optical fibre (6) is arranged to generate a rotation of the polarisation direction in normal dispersion mode in a non-soliton-like mode.

2. Device according to claim 1, wherein the Q-switched laser has a very small cavity length, said cavity length imposing frequency spacing (df) between the longitudinal modes greater than the gain bandwidth (Δf) of the amplifying materials of said laser, the value of the frequency spacing being df=c/(2.1), with c being the speed of light and 1 the length of the cavity.

3. Device according to one of the previous claims, wherein said fibre is such that the zero dispersion wavelength of said fibre is greater than said emission wavelength.

4. Device according to one of the previous claims, wherein said pulse laser is a Q-switched laser.

5. Device according to the previous claim, wherein the pulse laser is arranged to operate between 800 nanometres and 1.2 micrometres.

6. Device according to one of the previous claims, wherein said pulse laser (10, 2, 3) comprises a non-polarised pulse laser (2) and an input polariser (3).

7. Device according to one of the previous claims, further comprising a half-wave plate (4) positioned between the pulse laser and the fibre, and arranged in such a way that the polarisation direction of the laser wave at the output of said half-wave plate is not collinear to said birefringence axes.

8. Device according to one of claims 1 to 6, comprising Lefèbvre loops positioned at the fibre input, and arranged in such a way that the polarisation direction of the laser wave at the output of said loops is not collinear to said birefringence axes of the fibre.

9. Device according to one of claims 1 to 6, wherein said polarised pulse laser is arranged with respect to said fibre in such a way that said polarisation direction is not collinear to said birefringence axes.

10. Device according to one of the previous claims, wherein said polarised pulse laser is suitable for emitting a laser pulse at an emission wavelength, and said fibre is a single-transverse-mode fibre at said emission wavelength.

11. Device according to one of the previous claims, wherein said fibre is such that the zero dispersion wavelength of said fibre is greater than said emission wavelength.

12. Device according to one of the previous claims, wherein the polariser (9) allows, according to the orientation of said polariser with respect to the fibre (6) or to a half-wave plate (8) positioned at the fibre (6) output, a greater or lesser pulse length to be selected, said length being between the input pulse length and a pulse shortened by a maximum factor close to 16.

13. Method for generating short pulses, comprising steps in which:
- a device (1) according to any of the previous claims is provided;
- the polarised pulse laser (10, 2, 3) generates long pulses;
- the long pulses are cut up in the birefringent optical fibre (6) in such a way as to generate the short pulses;
- the short pulses are recovered at the output of the output polariser (9).

14. Method for generating short pulses according to claim 13, wherein a greater or lesser pulse length is selected, said length being between the input pulse length and a pulse shortened by a maximum factor close to 16, by selecting the orientation of the polariser (9) with respect to the fibre (6) or to a half-wave plate (8) positioned at the fibre (6) output.
